# EUROPEAN PATENT APPLICATION

(11) **EP 4 841 714 A1**
(43) Date of publication of application: **18.11.2026**
(21) Application number: 24923311.5
(22) Date of filing: 11.09.2024
(51) Int. Cl.: H01M 4/62, H01M 10/054

(54) **SODIUM SECONDARY BATTERY, POSITIVE ELECTRODE SHEET, SODIUM SUPPLEMENT ADDITIVE, AND ELECTRIC DEVICE**

(30) Priority: 08.02.2024 CN 202410177937
(71) Applicant: Contemporary Amperex Technology Co., Limited, Ningde, Fujian 352100 (CN)
(72) Inventor: TANG, Zheng, Ningde, Fujian 352100 (CN); YE, Yonghuang, Ningde, Fujian 352100 (CN); JIN, Haizu, Ningde, Fujian 352100 (CN); OUYANG, Shaocong, Ningde, Fujian 352100 (CN)
(74) Representative: Straus, Alexander
(86) International application number: PCT/CN2024/118332
(87) International publication number: WO 2025/167103

(57) **Abstract**

The present application provides a sodium secondary battery, a positive electrode sheet, a sodium supplement additive, and an electric device. The sodium secondary battery of the present application comprises a sodium supplement additive, and the sodium supplement additive has a molecular formula of Na_{w}BₓD_{y}O_{z}, wherein B comprises at least one of P, Sb, Ge, Ti, Sn, As, and Si, D comprises at least one of S, Se, and Cl, w is greater than 0 and less than or equal to 15, x is greater than 0 and less than or equal to 5, y is greater than 0 and less than or equal to 15, and z is greater than or equal to 0 and less than or equal to 5. The sodium secondary battery of the present application has good mass energy density and cycle performance.

## Description

### CROSS-REFERENCE TO RELATED APPLICATIONS

This application claims priority to Chinese Patent Application No. 202410177937.X filed on February 8, 2024 and entitled "SODIUM SECONDARY BATTERY, POSITIVE ELECTRODE SHEET, SODIUM SUPPLEMENTING ADDITIVE, AND ELECTRIC APPARATUS", which is incorporated herein by reference in its entirety.

### TECHNICAL FIELD

This application relates to the technical field of secondary batteries, in particular to a sodium secondary battery, a positive electrode sheet, a sodium supplementing additive, and an electric apparatus.

### BACKGROUND

Sodium batteries have great application prospects in large-scale energy storage due to their abundant reserves, low price, and wide operating temperature range.

Sodium secondary batteries suffer from the problem of sodium loss during cycling, which greatly affects the electrical performance of the sodium secondary batteries.

### SUMMARY

This application is made in view of the above-mentioned issues, and aims to solve at least one of the technical problems existing in the prior art. Therefore, this application provides a sodium secondary battery, a positive electrode sheet, a sodium supplementing additive, and an electric apparatus. The sodium secondary battery of this application has good gravimetric energy density and cycling performance.

According to a first aspect, this application provides a sodium secondary battery. The sodium secondary battery includes a sodium supplementing additive, and the sodium supplementing additive has a molecular formula of Na_{w}BₓD_{y}O_{z}, where B includes at least one of P, Sb, Ge, Ti, Sn, As, or Si, D includes at least one of S, Se, or Cl, 0<w≤15, 0<x≤5, 0<y≤15, and 0≤z≤5.

A positive electrode material of a sodium secondary battery undergoes phase transformation during a cyclic sodium deintercalation process. The phase transformation reduces lattice spacing, which in turn leads to sodium loss. In addition, an SEI film formed on a negative electrode material of the sodium secondary battery during the first charge and discharge consumes sodium ions, which also causes loss of sodium ions. The loss of sodium ions deteriorates the gravimetric energy density and cycling performance of the sodium secondary battery. This application achieves a sodium supplementing function by adding the sodium supplementing additive Na_{w}BₓD_{y}O_{z} to the sodium secondary battery. The sodium supplementing additive of this application can be decomposed without producing gas. A cationic portion produced by decomposition is sodium ions. On the one hand, the generated sodium ions can participate in the formation of a negative electrode SEI film, which helps to improve the cycling performance of the sodium secondary battery. On the other hand, the generated sodium ions can directly supplement the sodium consumption of the positive electrode. Different from existing sodium supplementing agents, the sodium supplementing additive of this application is decomposed to generate an anionic portion that does not produce gas, and most of the sodium supplementing additive still maintains the original structure. In addition, some of the sodium ions are still stored in the structure, which can provide a reversible capacity for the sodium secondary battery, thereby helping to improve the gravimetric energy density of the sodium secondary battery. The sodium supplementing additive of this application has a good sodium supplementing function and does not produce gas upon decomposition. The sodium secondary battery containing the sodium supplementing additive of this application has good gravimetric energy density and cycling performance.

In any embodiment, a decomposition voltage of the sodium supplementing additive is 3.1 V to 4.0 V.

The sodium supplementing additive of this application has a suitable decomposition voltage, and the decomposition voltage highly matches with a formation voltage of the sodium secondary battery. When the decomposition voltage of the sodium supplementing additive of this application is 3.1 V to 4.0 V, during a formation process of the sodium secondary battery, the sodium supplementing additive can be decomposed to supplement sodium loss for the sodium secondary battery without causing deterioration to the electrical performance of the sodium secondary battery during decomposition.

In any embodiment, B includes at least one of P, Sb, Ge, Ti, Sn, or As, D includes at least one of S, Se, or Cl, 0<w≤11, 0<x≤3, 0<y≤13, and 0≤z≤3.

In any embodiment, the sodium supplementing additive includes at least one of Na₃PS₄, Na₃PS₃O, Na₃PSO₃, Na₃PS₃Cl, Na_{2.9375}PS_{3.9375}Cl_{0.0625}, Na_{2.9}PS_{3.95}Se_{0.05}, Na₃PSe₄, Na₃SbSe₄, Na_{3.1}Ge_{0.1}P_{0.9}S₄, Na_{3.1}Ti_{0.1}P_{0.9}S₄, Na_{3.1}Sn_{0.1}P_{0.9}S₄, Na₃P_{0.62}As_{0.38}S₄, Na_{2.730}Ca_{0.135}PS₄, Na₃SbS₄, Na₁₀SnP₂S₁₂, Na₁₀GeP₂S₁₂, Na₁₁Sn₂PS₁₂, Na₁₁Sn₂PS₁₂, Na₁₁Sn₂PSe₁₂, or hydrates thereof.

In any embodiment, the sodium supplementing additive includes at least one of Na₃PS₄, Na₃PS₃O, Na₃PSO₃, Na₃PS₃Cl, or Na₁₁Sn₂PSe₁₂.

In any embodiment, a median particle size Dᵥ50 of the sodium supplementing additive is 2 µm to 75 µm. In any embodiment, the median particle size Dᵥ50 of the sodium supplementing additive is 2 µm to 50 µm.

The sodium supplementing additive of this application has a suitable Dᵥ50. The suitable Dᵥ50 helps to provide a suitable decomposition rate for the sodium supplementing additive, and also facilitates the processing of a positive electrode slurry, thereby reducing the gelation phenomenon of the positive electrode slurry caused by an excessively small Dᵥ50 of the sodium supplementing additive.

In any embodiment, a median particle size Dᵥ50 of the positive electrode active material is 4 µm to 15 µm. In any embodiment, the median particle size Dᵥ50 of the positive electrode active material is 4 µm to 10 µm.

The positive electrode active material of this application has a suitable Dᵥ50, which helps to further improve the processability of the positive electrode slurry, thereby improving the cycling performance of the sodium secondary battery.

In any embodiment, based on a total mass of the positive electrode film layer, a mass percentage of the sodium supplementing additive is 0.5% to 5%. In any embodiment, based on the total mass of the positive electrode film layer, the mass percentage of the sodium supplementing additive is 2% to 5%.

A suitable content of the sodium supplementing additive helps to further improve the gravimetric energy density and cycling performance of the sodium secondary battery.

According to a second aspect, this application provides a positive electrode sheet. The positive electrode sheet includes a sodium supplementing additive, and the sodium supplementing additive has a molecular formula of Na_{w}BₓD_{y}O_{z}, where B includes at least one of P, Sb, Ge, Ti, Sn, As, or Si, D includes at least one of S, Se, or Cl, 0<w≤15, 0<x≤5, 0<y≤15, and 0≤z≤5.

According to a third aspect, this application provides a sodium supplementing additive. The sodium supplementing additive has a molecular formula of Na_{w}BₓD_{y}O_{z}, where B includes at least one of P, Sb, Ge, Ti, Sn, As, or Si, D includes at least one of S, Se, or Cl, 0<w≤15, 0<x≤5, 0<y≤15, and 0≤z≤5.

According to a fourth aspect, this application provides an electric apparatus. The electric apparatus includes the sodium secondary battery according to this application, the positive electrode sheet according to this application, or the sodium supplementing additive according to this application. The above description is only an overview of the technical solutions of this application. To more clearly understand the technical means of this application so that the technical means can be implemented in accordance with the content of the specification, and to make the above and other objectives, features, and advantages of this application more obvious and easier to understand, specific embodiments of this application are specifically listed below.

### BRIEF DESCRIPTION OF DRAWINGS

FIG. 1 is a schematic diagram of a secondary battery according to an embodiment of this application.
FIG. 2 is an exploded view of the secondary battery according to an embodiment of this application shown in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to an embodiment of this application shown in FIG. 4.
FIG. 6 is a schematic diagram of an electric apparatus using a secondary battery as a power source according to an embodiment of this application.

Description of reference signs:
1. battery pack; 2. upper box body; 3. lower box body; 4. battery module; 5. secondary battery; 51. shell; 52. electrode assembly; and 53. cover plate.

### DESCRIPTION OF EMBODIMENTS

The following describes in detail embodiments of a positive electrode active material and a manufacturing method thereof, a positive electrode sheet, a secondary battery, a battery module, a battery pack, and an electric apparatus of this application with appropriate reference to the drawings. However, there may be cases in which unnecessary detailed descriptions are omitted. For example, detailed descriptions of well-known matters and repeated descriptions of actually the same structures are omitted. This is to avoid the following description from becoming unnecessarily lengthy and to facilitate understanding by those skilled in the art. In addition, the drawings and the following description are provided for those skilled in the art to fully understand this application, and are not intended to limit the subject matter described in the claims.

The "range" disclosed in this application is defined in the form of a lower limit and an upper limit, and a given range is defined by selecting a lower limit and an upper limit, and the selected lower limit and upper limit define the boundaries of a particular range. The range defined in this way may or may not include endpoint values, and the end points may be combined arbitrarily, that is, any lower limit may be combined with any upper limit to form a range. For example, if ranges of 60 to 120 and 80 to 110 are listed for a specific parameter, it is understood that ranges of 60 to 110 and 80 to 120 are also contemplated. In addition, if minimum range values 1 and 2 are listed, and if maximum range values 3, 4, and 5 are listed, the following ranges can all be contemplated: 1 to 3, 1 to 4, 1 to 5, 2 to 3, 2 to 4, and 2 to 5. In this application, unless otherwise stated, a numerical range "a to b" represents an abbreviation of any real number combination between a and b, where a and b are both real numbers. For example, the numerical range "0 to 5" means that all real numbers between "0 to 5" have been listed herein, and "0 to 5" is only an abbreviation of these numerical combinations. In addition, when it is stated that a specific parameter is an integer of greater than or equal to 2, it is equivalent to disclosing that the parameter is, for example, an integer 2, 3, 4, 5, 6, 7, 8, 9, 10, 11, 12, or the like.

If there is no particular description, all embodiments and optional embodiments of this application can be combined with each other to form new technical solutions.

If there is no particular description, all technical features and optional technical features of this application can be combined with each other to form new technical solutions.

If there is no particular description, all steps mentioned in this application can be performed sequentially or randomly, preferably performed sequentially. For example, the method includes steps (a) and (b), which means that the method may include steps (a) and (b) performed sequentially, or may include steps (b) and (a) performed sequentially. For example, when it is mentioned that the method may further include step (c), it means that step (c) may be added to the method in any order. For example, the method may include steps (a), (b), and (c), may include steps (a), (c), and (b), may include steps (c), (a), and (b), or the like.

If there is no particular description, "include", "comprise", and "have" mentioned in this application indicate an open meaning or a closed meaning. For example, "include" and "comprise" may mean that other components not listed may also be included or comprised, or only the listed components may be included or comprised.

If there is no particular description, the term "or" in this application is inclusive. For example, the phrase "A or B" means "A, B, or both A and B". More specifically, any of the following conditions satisfies the condition "A or B": A is true (or present) and B is false (or absent); A is false (or absent) and B is true (or present); or both A and B are true (or present).

Sodium batteries have great application prospects in large-scale energy storage due to their abundant reserves, low price, and wide operating temperature range. Sodium secondary batteries undergo phase transformation during a cyclic sodium deintercalation process, and the phase transformation reduces lattice spacing, which in turn leads to sodium loss. In addition, an SEI film formed on a negative electrode material of a sodium secondary battery during the first charge and discharge consumes sodium ions, which also causes loss of sodium ions. The loss of sodium ions deteriorates the gravimetric energy density and cycling performance of the sodium secondary battery. Most sodium supplementing agents have an excessively high decomposition voltage and/or produce gas while generating sodium ions during decomposition. In a sodium secondary battery system, if the decomposition voltage of the sodium supplementing agent is excessively high, the sodium supplementing agent cannot decompose during a formation process, and thus cannot achieve a sodium supplementing function. The produced gas is likely to undergo side reactions with an electrolyte, which affects the electrical performance of the sodium secondary battery. Therefore, it is necessary to develop a sodium supplementing agent that matches the sodium secondary battery system.

### [Sodium secondary battery]

In view of this, this application provides a sodium secondary battery. The sodium secondary battery includes a sodium supplementing additive, and the sodium supplementing additive has a molecular formula of Na_{w}BₓD_{y}O_{z}, where B includes at least one of P, Sb, Ge, Ti, Sn, As, or Si, D includes at least one of S, Se, or Cl, 0<w≤15, 0<x≤5, 0<y≤15, and 0≤z≤5.

As used herein, the term "sodium secondary battery" refers to a secondary battery that uses sodium ions as charge carriers.

In some embodiments, the sodium secondary battery includes a positive electrode sheet and an electrolyte. The positive electrode sheet includes a positive electrode film layer, and the positive electrode film layer includes a positive electrode active material and a sodium supplementing additive.

In some embodiments, the positive electrode active material includes at least one of a polyanionic compound, a layered oxide, or a Prussian blue compound.

In some embodiments, the sodium secondary battery does not include a solid-state sodium secondary battery.

In some embodiments, the electrolyte includes an electrolytic salt and a solvent.

In some embodiments, the sodium supplementing additive has a molecular formula of Na_{w}BₓD_{y}O_{z} and is used as a sodium supplementing agent for sodium secondary batteries.

In some embodiments, "the sodium supplementing additive has a molecular formula of Na_{w}BₓD_{y}O_{z}" means that the sodium supplementing additive covers substances having the molecular formula Na_{w}BₓD_{y}O_{z} and hydrates thereof.

In some embodiments, the polyanionic compound may be a type of compounds having metal ions, transition metal ions, and tetrahedral (YO4)ₙ anionic units. The metal ion is optionally at least one of sodium ion, lithium ion, potassium ion, or zinc ion; the transition metal is optionally at least one of Mn, Fe, Ni, Co, Cr, Cu, Ti, Zn, V, Zr, or Ce; Y is optionally at least one of P, S, or Si; and n represents a valence state of (YO4)ₙ.

In some embodiments, the layered oxide includes a layered transition metal oxide. In some embodiments, the transition metal in the layered transition metal oxide may be at least one of Mn, Fe, Ni, Co, Cr, Cu, Ti, Zn, V, Zr, or Ce. In some embodiments, the layered transition metal oxide is, for example, NaₓMO₂, where M is one or more of Ti, V, Mn, Co, Ni, Fe, Cr, and Cu, and 0<x≤1.

This application achieves a sodium supplementing function by adding the sodium supplementing additive Na_{w}BₓD_{y}O_{z} to the sodium secondary battery. The sodium supplementing additive of this application can be decomposed without producing gas. A cationic portion produced by decomposition is sodium ions. On the one hand, the generated sodium ions can participate in the formation of a negative electrode SEI film, which helps to improve the cycling performance of the sodium secondary battery. On the other hand, the generated sodium ions can directly supplement the sodium consumption of a positive electrode. Different from existing sodium supplementing agents, the sodium supplementing additive of this application is decomposed to generate an anionic portion that does not produce gas, part of the sodium supplementing additive still maintains a spatial structure of the original configuration, and some of the sodium ions are still stored in this spatial structure. The sodium ions can be intercalated and deintercalated through the spatial structure of the sodium supplementing additive material, providing a reversible capacity for the sodium secondary battery as well as increasing a sodium ion conduction rate, thereby helping to improve the gravimetric energy density and kinetic performance of the sodium secondary battery.

The sodium supplementing additive of this application has a good sodium supplementing function and does not produce gas upon decomposition. The sodium secondary battery containing the sodium supplementing additive of this application has good gravimetric energy density and cycling performance.

In some embodiments, a decomposition voltage of the sodium supplementing additive is 3.1 V to 4.0 V.

As used herein, the term "decomposition voltage of the sodium supplementing additive" refers to a voltage at which the sodium supplementing additive can start decomposition to release cations and/or anions.

In some embodiments, the decomposition voltage of the sodium supplementing additive may be 3.1 V, 3.2 V, 3.3 V, 3.4 V, 3.5 V, 3.6 V, 3.7 V, 3.8 V, 3.9 V, 4.0 V, or a value within a range defined by any two of the decomposition voltages of the sodium supplementing additive.

The decomposition voltage of the sodium supplementing additive may be measured by methods and devices known in the art. For example, a charge-discharge tester may be used for testing. Specifically, the sodium supplementing additive, Ketjen black, and PVDF are mixed at a specific ratio (for example, 5:3:2) to form a slurry; the slurry is applied on an aluminum foil; the aluminum foil coated with the slurry is assembled with a sodium sheet in a glove box to form a sodium half-cell; the sodium half-cell is charged at a specific current density (for example, 10 mA/g) in the charge-discharge tester; and then a decomposition voltage curve of the sodium supplementing additive can be obtained.

The sodium supplementing additive of these embodiments of this application has a suitable decomposition voltage, and the decomposition voltage highly matches with a formation voltage of the sodium secondary battery. When the decomposition voltage of the sodium supplementing additive of these embodiments of this application is 3.1 V to 4.0 V, during a formation process of the sodium secondary battery, the sodium supplementing additive can be decomposed to supplement sodium loss for the sodium secondary battery.

In some embodiments, B includes at least one of P, Sb, Ge, Ti, Sn, or As, D includes at least one of S, Se, or Cl, 0<w≤11, 0<x≤3, 0<y≤13, and 0≤z≤3.

In some embodiments, B includes at least one of P or Sn. In some embodiments, D includes S. In some embodiments, w may be 1, 2, 3, 4, 5, 6, 7, 8, 9, 10, 11, 12, 13, 14, or 15. In some embodiments, x may be 1, 2, 3, 4, or 5. In some embodiments, y may be 1, 2, 3, 4, 5, 6, 7, 8, 9, 10, 11, 12, 13, 14, or 15. In some embodiments, z may be 0, 1, 2, 3, 4, or 5.

In some embodiments, the sodium supplementing additive includes at least one of Na₃PS₄, Na₃PS₃O, Na₃PSO₃, Na₃PS₃Cl, Na_{2.9375}PS_{3.9375}Cl_{0.0625}, Na_{2.9}PS_{3.95}Se_{0.05}, Na₃PSe₄, Na₃SbSe₄, Na_{3.1}Ge_{0.1}P_{0.9}S₄, Na_{3.1}Ti_{0.1}P_{0.9}S₄, Na_{3.1}Sn_{0.1}P_{0.9}S₄, Na₃P_{0.62}As_{0.38}S₄, Na_{2.730}Ca_{0.135}PS₄, Na₃SbS₄, Na₁₀SnP₂S₁₂, Na₁₀GeP₂S₁₂, Na₁₁Sn₂PS₁₂, Na₁₁Sn₂PS₁₂, Na₁₁Sn₂PSe₁₂, or hydrates thereof.

In some embodiments, the sodium supplementing additive includes at least one of Na₃PS₄, Na₃PS₃O, Na₃PSO₃, Na₃PS₃Cl, or Na₁₁Sn₂PSe₁₂.

In some embodiments, a median particle size Dᵥ50 of the sodium supplementing additive is 2 µm to 75 µm.

In some embodiments, the median particle size Dᵥ50 of the sodium supplementing additive is 2 µm to 50 µm. In some embodiments, the median particle size Dᵥ50 of the sodium supplementing additive is 2 µm to 30 µm. In some embodiments, a median particle size Dᵥ50 of the sodium supplementing additive is 2 µm to 20 µm. In some embodiments, the median particle size Dᵥ50 of the sodium supplementing additive is 2 µm to 15 µm. In some embodiments, the median particle size Dᵥ50 of the sodium supplementing additive is 2 µm to 12 µm.

As used herein, the term "Dᵥ50" refers to a particle size at which a volume-based cumulative particle size distribution percentage reaches 50%.

In some embodiments, the median particle size Dᵥ50 of the sodium supplementing additive may be 2 µm, 3 µm, 4 µm, 5 µm, 6 µm, 7 µm, 8 µm, 9 µm, 10 µm, 12 µm, 14 µm, 16 µm, 18 µm, 20 µm, 25 µm, 30 µm, 35 µm, 40 µm, 45 µm, 50 µm, 55 µm, 60 µm, 65 µm, 70 µm, 75 um, or a value within a range defined by any two of the median particle sizes Dᵥ50 of the positive electrode active material.

A suitable Dᵥ50 helps to provide a suitable decomposition rate for the sodium supplementing additive, and also facilitates the processing of a positive electrode slurry, thereby reducing a gelation phenomenon of the positive electrode slurry caused by an excessively small Dᵥ50 of the sodium supplementing additive. The Dᵥ50 of the sodium supplementing additive being 2 µm to 75 µm helps to further improve the gravimetric energy density and cycling performance of the sodium secondary battery.

In some embodiments, a median particle size Dᵥ50 of the positive electrode active material is 4 µm to 15 µm. In some embodiments, the median particle size Dᵥ50 of the positive electrode active material is 4 µm to 10 µm. In some embodiments, the median particle size Dᵥ50 of the positive electrode active material is 4 µm to 8 µm.

In some embodiments, the median particle size Dᵥ50 of the positive electrode active material may be 4 µm, 5 µm, 6 µm, 7 µm, 8 µm, 9 µm, 10 µm, 11 µm, 12 µm, 13 µm, 14 µm, 15 µm, or a value within a range defined by any two of the median particle sizes Dᵥ50 of the positive electrode active material.

The Dᵥ50 of the sodium supplementing additive and the positive electrode active material may be measured by methods and devices known in the art. For example, measurement may be performed using a laser particle size analyzer (Malvern Master Size 3000) with reference to GB/T19077.1-2016.

Controlling the Dᵥ50 of the positive electrode active material of these embodiments of this application within the above ranges helps to further improve the processability of the positive electrode slurry, thereby improving the cycling performance of the sodium secondary battery.

In some embodiments, based on a total mass of a positive electrode film layer, a mass percentage of the sodium supplementing additive is 0.5% to 5%. In some embodiments, based on the total mass of the positive electrode film layer, the mass percentage of the sodium supplementing additive is 2% to 5%. In some embodiments, based on the total mass of the positive electrode film layer, the mass percentage of the sodium supplementing additive is 3% to 5%.

In some embodiments, based on the total mass of the positive electrode film layer, the mass percentage of the sodium supplementing additive may be 0.5%, 1%, 2%, 3%, 4%, 5%, or a value within a range defined by any two of these mass percentages of the sodium supplementing additive.

A suitable content of the sodium supplementing additive helps to provide sodium ions as well as makes the positive electrode active material have a suitable content, thereby helping to further improve the gravimetric energy density and cycling performance of the sodium secondary battery.

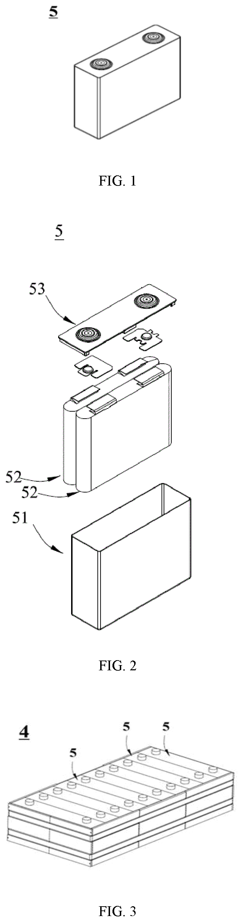

This application does not impose any particular limitation on the shape of the sodium secondary battery, and the sodium secondary battery may be cylindrical, square, or of any other shape. For example, FIG. 1 shows a square sodium secondary battery 5 as an example.

In some embodiments, referring to FIG. 2, an outer package may include a shell 51 and a cover plate 53. The shell 51 may include a bottom plate and side plates connected to the bottom plate, where the bottom plate and the side plates enclose an accommodating cavity. The shell 51 has an opening communicating with the accommodating cavity, and the cover plate 53 can cover the opening to close the accommodating cavity. A positive electrode sheet, a negative electrode sheet, and a separator may form an electrode assembly 52 through a winding process or a stacking process. The electrode assembly 52 is encapsulated in the accommodating cavity. The electrolyte infiltrates the electrode assembly 52. The sodium secondary battery 5 may include one or more electrode assemblies 52, and those skilled in the art can select according to specific actual needs.

In some embodiments, the sodium secondary battery may be assembled into a battery module, and the battery module may include one or more sodium secondary batteries. The specific number may be selected by those skilled in the art according to the application and capacity of the battery module.

FIG. 3 shows a battery module 4 as an example. Referring to FIG. 3, in the battery module 4, a plurality of sodium secondary batteries 5 may be arranged in sequence along a length direction of the battery module 4. Certainly, the sodium secondary batteries 5 may alternatively be arranged in any other manner. Further, the plurality of sodium secondary batteries 5 may be fixed by fasteners.

In some embodiments, the battery module 4 may further include a housing having an accommodating space, and the plurality of sodium secondary batteries 5 are accommodated in the accommodating space.

In some embodiments, the battery module can also be assembled into a battery pack, and the battery pack may include one or more battery modules. The specific number may be selected by those skilled in the art according to the application and capacity of the battery pack.

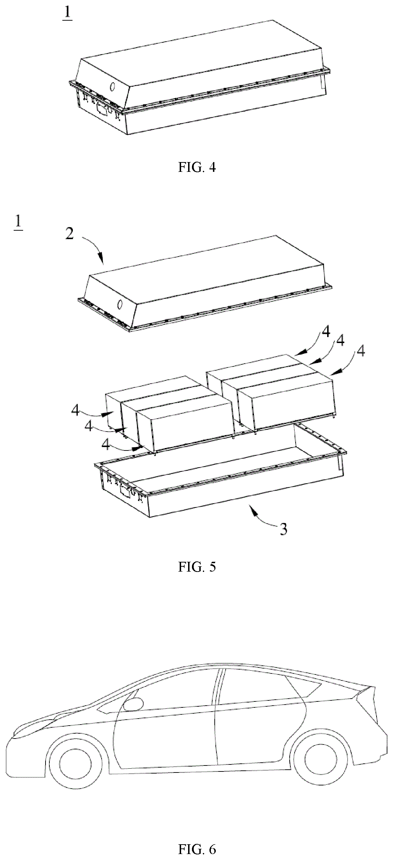

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form a closed space for accommodating the battery modules 4. The plurality of battery modules 4 may be arranged in the battery box in any manner.

### [Positive electrode sheet]

This application further provides a positive electrode sheet. The positive electrode sheet includes a sodium supplementing additive, and the sodium supplementing additive has a molecular formula of Na_{w}BₓD_{y}O_{z}, where B includes at least one of P, Sb, Ge, Ti, Sn, As, or Si, D includes at least one of S, Se, or Cl, 0<w≤15, 0<x≤5, 0<y≤15, and 0≤z≤5.

In some embodiments, the positive electrode sheet includes a positive electrode current collector and a positive electrode film layer disposed on at least one surface of the positive electrode current collector, where the positive electrode film layer further includes a binder and a conductive agent.

In an example, the positive electrode current collector has two opposite surfaces in its thickness direction, and the positive electrode film layer is disposed on either or both of the two opposite surfaces of the positive electrode current collector.

In some embodiments, the positive electrode current collector may be a conductive carbon sheet, a metal foil, a carbon-coated metal foil, a porous metal plate, or a composite current collector. A conductive carbon material of the conductive carbon sheet is optionally one or more of Super P, carbon black, Ketjen black, carbon dots, carbon nanotubes, graphite, graphene, and carbon nanofiber. Metal materials of the metal foil, carbon-coated metal foil, and porous metal plate are each independently at least one selected from copper, aluminum, nickel, and stainless steel. The composite current collector may be a composite current collector formed by laminating a metal foil and a polymer base film.

In some embodiments, the positive electrode film layer further includes a binder. In an example, the binder may include at least one of polyvinylidene fluoride (PVDF), polytetrafluoroethylene (PTFE), polyacrylic acid (PAA), polyvinyl alcohol (PVA), ethylene-vinyl acetate copolymer (EVA), styrene-butadiene rubber (SBR), carboxymethyl cellulose (CMC), sodium alginate (SA), polymethacrylic acid (PMA), or carboxymethyl chitosan (CMCS).

In some embodiments, the positive electrode film layer further includes a conductive agent. In an example, the conductive agent may include at least one of superconducting carbon, acetylene black, carbon black, Ketjen black, carbon dots, carbon nanotubes, graphene, or carbon nanofiber.

In some embodiments, the positive electrode sheet may be prepared using the following method: the above components for preparing the positive electrode sheet, such as the positive electrode active material, the additive, the conductive agent, the binder, and any other components, are dispersed in a solvent (for example, N-methylpyrrolidone) to form a positive electrode slurry, and the positive electrode slurry is applied on a positive electrode current collector, followed by processes such as drying and cold pressing, to obtain the positive electrode sheet.

### [Negative electrode sheet]

In some embodiments, the sodium secondary battery further includes a negative electrode sheet.

The negative electrode sheet includes a negative electrode current collector and a negative electrode film layer disposed on at least one surface of the negative electrode current collector, where the negative electrode film layer includes a negative electrode active material.

In an example, the negative electrode current collector has two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, a copper foil or an aluminum foil may be used as the metal foil. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), and polyethylene (PE)).

In some embodiments, the negative electrode active material may be a negative electrode active material for batteries well known in the art. In an example, the negative electrode active material may include at least one of the following materials: artificial graphite, natural graphite, soft carbon, hard carbon, a silicon-based material, a tin-based material, lithium titanate, or the like. The silicon-based material may be at least one selected from elemental silicon, silicon oxide, a silicon-carbon compound, a silicon-nitrogen compound, or silicon alloy. The tin-based material may be at least one selected from elemental tin, tin oxide, or tin alloy. However, this application is not limited to these materials, and other conventional materials that can be used as negative electrode active materials for batteries may alternatively be used. These negative electrode active materials may be used alone or more than two of them are used in combination.

In some embodiments, the negative electrode film layer further optionally includes a binder. The binder may be at least one selected from styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS).

In some embodiments, the negative electrode film layer further optionally includes a conductive agent. The conductive agent may be at least one selected from superconducting carbon, acetylene black, carbon black, Ketjen black, carbon dots, carbon nanotubes, graphene, or carbon nanofiber.

In some embodiments, the negative electrode film layer further optionally includes other additives, such as a thickener (for example, sodium carboxymethyl cellulose (CMC-Na)).

In some embodiments, the negative electrode sheet may be prepared using the following method: the above components for preparing the negative electrode sheet, such as the negative electrode active material, the conductive agent, the binder, and any other components, are dispersed in a solvent (for example, deionized water) to form a negative electrode slurry; the negative electrode slurry is applied on a negative electrode current collector, followed by processes such as drying and cold pressing, to obtain the negative electrode sheet.

### [Electrolyte]

The electrolyte plays a role in conducting ions between the positive electrode sheet and the negative electrode sheet. The electrolyte of the embodiments of this application is in a liquid state and includes an electrolytic salt and a solvent.

In some embodiments, the electrolytic salt may be at least one selected from sodium hexafluorophosphate or sodium fluorosulfonimide.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone and diethyl sulfone.

In some embodiments, the electrolyte further optionally includes an additive. For example, the additive may include a negative electrode film-forming additive and a positive electrode film-forming additive, and may further include additives that can improve some performance of batteries, such as additives that improve overcharge performance of batteries and additives that improve high-temperature or low-temperature performance of batteries.

### [Separator]

In some embodiments, the sodium secondary battery further includes a separator. This application does not impose any particular limitation on the type of the separator, and any well-known porous structure separator with good chemical stability and mechanical stability may be used.

In some embodiments, a material of the separator may be at least one selected from glass fiber, non-woven fabric, polyethylene, polypropylene, or polyvinylidene fluoride. The separator may be a single-layer film or a multi-layer composite film, without particular limitation. When the separator is a multi-layer composite film, the materials of the layers may be the same or different, without particular limitation.

In some embodiments, the positive electrode sheet, the negative electrode sheet, and the separator may be made into an electrode assembly through a winding process or a stacking process.

In some embodiments, the sodium secondary battery may include an outer package. The outer package may be used to encapsulate the above-mentioned electrode assembly and electrolyte.

In some embodiments, the outer package of the sodium secondary battery may be a hard shell, such as a hard plastic shell, an aluminum shell, or a steel shell. The outer package of the sodium secondary battery may alternatively be a soft package, such as a pouch-type soft package. A material of the soft package may be plastic, and examples of the plastic include polypropylene, polybutylene terephthalate, polybutylene succinate, and the like.

This application further provides a sodium supplementing additive. The sodium supplementing additive has a molecular formula of Na_{w}BₓD_{y}O_{z}, where B includes at least one of P, Sb, Ge, Ti, Sn, As, or Si, D includes at least one of S, Se, or Cl, 0<w≤15, 0<x≤5, 0<y≤15, and 0≤z≤5.

### [Electric apparatus]

This application also provides an electric apparatus. The electric apparatus includes the sodium secondary battery of this application, the positive electrode sheet of this application, or the sodium supplementing additive of this application.

In some embodiments, the electric apparatus of the embodiments of this application may further include at least one of a battery module or a battery pack. The secondary battery, battery module, or battery pack may be used as a power source for the electric apparatus or as an energy storage unit for the electric apparatus. The electric apparatus may include mobile devices (such as mobile phones and laptop computers), electric vehicles (such as battery electric vehicles, hybrid electric vehicles, plug-in hybrid electric vehicles, electric bicycles, electric scooters, electric golf carts, and electric trucks), electric trains, ships, satellites, energy storage systems, and the like, but is not limited thereto.

For the electric apparatus, a secondary battery, a battery module, or a battery pack may be selected according to the use requirements of the electric apparatus.

FIG. 6 shows an electric apparatus as an example. The electric apparatus is a battery electric vehicle, a hybrid electric vehicle, a plug-in hybrid electric vehicle, or the like. To meet the requirements of the electric apparatus for high power and high energy density of secondary batteries, a battery pack or a battery module may be used.

In another example, the apparatus may be a mobile phone, a tablet computer, a laptop computer, or the like. The apparatus is usually required to be light and thin, and may use a secondary battery as a power source.

### EXAMPLES

The following describes examples of this application. The examples described below are exemplary and are only used to explain this application, and cannot be understood as limitations to this application. For specific techniques or conditions that are not indicated in the examples, reference is made to the techniques or conditions described in the literature in the art or the product specification. Reagents or instruments used without indicating the manufacturers are all conventional products that can be obtained through market purchase.

### I. Preparation method

### Example 1

### (1) Preparation of sodium supplementing additive

Na₂S and P₂S₅ were mixed at a specific ratio and then sintered at a high temperature under an oxygen-free condition to obtain Na₃PS₄. Na₃PS₄ was dissolved in methanol; and the resulting mixture was heated to 100°C, left for about 6 hours, and dried to obtain Na₃PS₃O. Na₃PS₃O was dissolved in deionized water at a specific ratio, and the resulting mixture was fully dissolved, freeze-dried, and then subjected to particle crushing and sieving for later use. A Dᵥ50 value of the sodium supplementing additive Na₃PS₃O was 4 µm.

### (2) Preparation of positive electrode material

A positive electrode active material Na_{0.82}Ni_{0.33}Fe_{0.33}Mn_{0.33}O₂, the sodium supplementing additive Na₃PS₃O, a conductive agent conductive carbon black, and a binder polyvinylidene fluoride were fully stirred and mixed in N-methylpyrrolidone at a mass percentage of 92:3:3:2 to form a uniform positive electrode slurry. The positive electrode slurry was applied on an aluminum foil according to a weight of 0.3 g/1540.25mm² per surface. After coating was completed, drying, cold pressing, and slitting were performed to obtain a positive electrode sheet.

### (3) Preparation of negative electrode sheet

A negative electrode active material hard carbon, a conductive agent carbon black, a thickener carboxymethyl cellulose, and a binder styrene-butadiene rubber were added to deionized water at a mass ratio of 97:0.5:0.5:2, and the resulting mixture was stirred uniformly to obtain a negative electrode slurry; and
the negative electrode slurry was then uniformly applied on a copper foil according to a weight of 0.28 g/1540.25mm² on two surfaces. After the two surfaces were coated, drying, cold pressing, and slitting were performed to obtain a negative electrode sheet.

### (4) Preparation of separator

A polypropylene film was used as the separator.

### (5) Preparation of electrolyte

In an argon atmosphere glove box (H₂O<0.1 ppm, and O₂<0.1 ppm), a sodium salt sodium hexafluorophosphate NaPF₆ was dissolved in an organic solvent propylene carbonate (PC) added with 5% by mass of FEC fluoroethylene carbonate, and the resulting mixture was stirred uniformly to obtain an electrolyte with a sodium salt concentration of 1 mol/L.

### (6) Preparation of battery

The above positive electrode sheet, separator, and negative electrode sheet were stacked in order so that the separator was located between the positive and negative electrode sheets for isolation. Then the stack was wound to obtain a bare cell. Tabs were welded to the bare cell; the bare cell was placed into an aluminum shell, followed by baking in a vacuum oven at 100°C for 8 h. Then, the electrolyte was injected into the shell, and then the shell was sealed to obtain a battery with no power. The battery with no power was then subjected to processes such as standing, cold and hot pressing, formation, shaping, and capacity testing in sequence to obtain a sodium secondary battery of Example 1.

Preparation methods of batteries of Examples 2 to 4 were similar to the preparation method in Example 1, except that the type of the sodium supplementing additive was adjusted, specifically as shown in Table 1.

Preparation methods of batteries of Examples 5 to 8 were similar to the preparation method in Example 1, except that the median particle size Dᵥ50 value of the sodium supplementing additive was adjusted, specifically as shown in Table 1.

Preparation methods of batteries of Examples 9 and 10 were similar to the preparation method in Example 1, except that the median particle size Dᵥ50 value of the positive electrode active material was adjusted, specifically as shown in Table 1.

Preparation methods of batteries of Examples 11 and 12 were similar to the preparation method in Example 1, except that the mass percentages of the sodium supplementing additive and the positive electrode active material were adjusted, specifically as shown in Table 1.

A preparation method of a battery of Comparative Example 1 was similar to the preparation method in Example 1, except that no sodium supplementing additive was added to the positive electrode film layer.

Preparation methods of batteries of Comparative Examples 2 and 3 were similar to the preparation method in Example 1, except that the type of the sodium supplementing additive was adjusted, specifically as shown in Table 1.

### II. Battery performance testing

### 1. Performance testing of sodium supplementing additive and positive electrode active material

### (1) Testing of median particle size Dᵥ50 of sodium supplementing additive

The median particle size Dᵥ50 value of the sodium supplementing additive could be measured using a laser particle size analyzer (Malvern Master Size 3000) with reference to GB/T19077.1-2016.

### (2) Testing of median particle size Dᵥ50 of positive electrode active material

The median particle size Dᵥ50 value of the positive electrode active material could be measured using a laser particle size analyzer (Malvern Master Size 3000) with reference to GB/T19077.1-2016.

### (3) Testing of decomposition voltage of sodium supplementing additive

The sodium supplementing additive, Ketjen black, and PVDF were mixed at a ratio of 5:3:2 to form a slurry; the slurry was applied on an aluminum foil; and the aluminum foil coated with the slurry was assembled with a sodium sheet in a glove box to form a sodium half-cell. The sodium half-cell was charged at a current density of 10 mA/g in a charge-discharge tester, to obtain a decomposition voltage curve of the sodium supplementing additive, where the longitudinal coordinate represented voltage and the horizontal coordinate represented gram capacity.

### (4) Detection of whether gas was produced during decomposition of sodium supplementing additive

After a stacked battery was formed after assembly, the battery was charged at 0.05C to 3.9 V, and whether a swelling phenomenon occurred was observed. Gas was collected using a drainage method to confirm a specific gas production amount. If a difference between an exhaust volume of a battery containing the sodium supplementing additive and an exhaust volume of a reference battery (a battery without the sodium supplementing additive) was less than or equal to 3 ml/Ah, it was determined that no gas was produced. Specific operation of the drainage method was as follows: A gas bag of a pouch cell was connected to a gas exhaust tube; a gas collection bottle was first filled with water, with an opening covered by a glass sheet; and then the gas collection bottle was placed reversely in a water tank. When gas bubbles were continuously and uniformly released from a conduit mouth, the conduit mouth was inserted into the gas collection bottle filled with water. When bubbles were seen escaping from an outer edge of the opening of the gas collection bottle and a liquid level in the gas collection bottle dropped to the opening of the bottle, the opening of the bottle was covered by a glass sheet in water, and then the gas collection bottle was moved out of the water surface, placed upright or placed reversely on a table.

### (5) Method for detecting presence of sodium supplementing additive

The cell was charged to 4.0 V and then disassembled in an inert atmosphere glove box. A positive electrode sheet and a negative electrode sheet were taken out respectively. Powder on the positive electrode sheet was scraped off, 50 g of which was taken out, immersed in 100 g of anhydrous methanol, and stirred and dissolved for 4 h. 100 mL supernatant was taken, and dried under vacuum at 100°C to obtain powder (with a weight recorded as W). The powder was sent for XRD testing, where the testing was performed at a scanning rate of 1°C/min at 0°C to 90°C. Peak comparison was performed with a standard substance, for example, when Na₃PS₃O was used as the sodium supplementing additive, JCPDS·No27-0800 was selected as the standard substance, and for other sodium supplementing additives, corresponding PDF cards were used for comparison. The negative electrode sheet was sent for XPS peak spectrum testing, where the presence of P and S peak positions could be detected. The peak comparison results showed that the results were basically the same as the corresponding PDF cards; a powder concentration in the supernatant (that was, W/100 mL) was greater than or equal to 100 ppm; and the XPS peak spectrum showed that both P and S peak positions were present, indicating the presence of trace amounts of undecomposed sodium supplementing additive, which could be used as a basis for reverse detection.

### 2. Battery performance testing

### (1) Gravimetric energy density

A battery cell was left standing at 25°C for 2 h to ensure that the temperature of the battery cell was 25°C. At 25°C, the battery cell was charged at 0.33C to a charge cut-off voltage of 3.95 V, and then constant voltage charging was continued at this charge cut-off voltage until the current was 0.05C, at which charging was terminated (where C represented a rated capacity of the battery cell). After the battery cell was left standing at 25°C for 1 h, the battery cell was discharged at 0.33C to a discharge cut-off voltage of 1.5 V at 25°C, a total discharge capacity C0 discharged by the battery cell was recorded, and a total discharge energy was E0.

The battery cell was placed on an electronic balance until the weight was stable, and a weight value M0 of the battery cell was read.

Battery energy density=battery cell discharge energy E0/battery cell weight M0.

### (2) Cycling performance

At 25°C, the secondary batteries prepared in the examples and comparative examples were charged at a constant current of 1C to a charge cut-off voltage of 3.95 V, then charged at a constant voltage until the current was less than or equal to 0.05C, left standing for 5 min, and then discharged at a constant current at a rate of 0.33C to a discharge cut-off voltage of 1.5 V, and left standing for 5 min. This was one charge-discharge cycle. Each battery was subjected to cyclic charge-discharge testing according to this method until the battery capacity decayed to 80%. The number of cycles at that moment was recorded, which was a cycle life of the battery at 25°C.

### III. Test result analysis of examples and comparative examples

The batteries of the examples and comparative examples were prepared according to the above methods, and various performance parameters were measured. The relevant parameters of the positive electrode active material and the sodium supplementing additive are shown in Table 1, and the battery performance test results are shown in Table 2.

**Table 1. Relevant parameters of positive electrode active material and additive sodium supplementing additive**

| **No.** | **Sodium supplementing additive** | | | **Positive electrode film layer** | | |
|---|---|---|---|---|---|---|
| | **Type** | **Dᵥ50 (µm)** | **Decomposition voltage (V)** | **Dᵥ50 of positive electrode active material (µm)** | **Mass fraction of sodium supplementing additive (%)** | **Mass fraction of positive electrode active material (%)** |
| Example 1 | Na₃PS₃O | 4 | 3.83 | 6 | 3 | 92 |
| Example 2 | Na₃PS₄ | 4 | 3.72 | 6 | 3 | 92 |
| Example 3 | Na₃PSO₃ | 4 | 3.77 | 6 | 3 | 92 |
| Example 4 | Na₁₁Sn₂PSe₁₂ | 4 | 3.90 | 6 | 3 | 92 |
| Example 5 | Na₃PS₃O | 2 | 3.81 | 6 | 3 | 92 |
| Example 6 | Na₃PS₃O | 50 | 3.88 | 6 | 3 | 92 |
| Example 7 | Na₃PS₃O | 12 | 3.85 | 6 | 3 | 92 |
| Example 8 | Na₃PS₃O | 30 | 3.87 | 6 | 3 | 92 |
| Example 9 | Na₃PS₃O | 4 | 3.83 | 4 | 3 | 92 |
| Example 10 | Na₃PS₃O | 4 | 3.83 | 15 | 3 | 92 |
| Example 11 | Na₃PS₃O | 4 | 3.83 | 6 | 0.5 | 94.5 |
| Example 12 | Na₃PS₃O | 4 | 3.83 | 6 | 5 | 90 |
| Comparative Example 1 | / | / | / | 6 | / | 95 |
| Comparative Example 2 | Na₂CO₃ | 4 | 4.2 | 6 | 3 | 92 |
| Comparative Example 3 | Na₃PO₄ | 4 | No decomposition | 6 | 3 | 92 |

**Table 2. Battery performance test results**

| **No.** | **Situation of gas production by additive** | **Improvement percentage of gravimetric energy density (%)** | **Gravimetric energy density (Wh/Kg)** | **Cycling performance (cycles, 80%)** |
|---|---|---|---|---|
| Example 1 | No gas production | 104.3 | 132.5 | 1600 |
| Example 2 | No gas production | 105.4 | 133.9 | 1450 |
| Example 3 | No gas production | 102.2 | 129.8 | 1430 |
| Example 4 | No gas production | 103.7 | 131.7 | 1500 |
| Example 5 | No gas production | 104.5 | 132.7 | 1670 |
| Example 6 | No gas production | 102.1 | 129.7 | 1480 |
| Example 7 | No gas production | 103.2 | 131.1 | 1560 |
| Example 8 | No gas production | 102.6 | 130.3 | 1430 |
| Example 9 | No gas production | 103.1 | 130.9 | 1510 |
| Example 10 | No gas production | 104 | 132.1 | 1410 |
| Example 11 | No gas production | 101.2 | 128.5 | 1290 |
| Example 12 | No gas production | 108.7 | 138.0 | 1800 |
| Comparative Example 1 | / | 100 | 127.0 | 1200 |
| Comparative Example 2 | Gas production | 104 | 132.1 | 500 |
| Comparative Example 3 | No gas production | 97 | 123.2 | 1300 |

According to the results in the above table, it can be seen from Examples 1 to 12 and Comparative Example 1 that the sodium secondary battery added with the sodium supplementing additive of this application can effectively improve the gravimetric energy density and cycling performance.

It can be seen from Examples 1 to 12 and Comparative Example 2 that, compared with sodium supplementing agents commonly used on the market, such as Na₂CO₃, the sodium supplementing additive of the embodiments of this application does not produce gas upon decomposition and has a suitable decomposition voltage range, which not only improves the gravimetric energy density of the sodium secondary battery but also improves the cycling performance of the sodium secondary battery. However, Na₂CO₃ has an excessively high decomposition voltage, which affects the cycling performance of the battery to some extent.

It can be seen from Examples 1 to 12 and Comparative Example 3 that, compared with other types of sodium-containing compounds, such as Na₃PO₄, the sodium supplementing additive of this application can be decomposed at a suitable decomposition voltage to supplement sodium, thereby improving the gravimetric energy density of the sodium secondary battery. However, Na₃PO₄ cannot be decomposed and thus cannot supplement sodium loss for the sodium secondary battery.

It can be seen from Examples 1 to 4 that different types of sodium supplementing additives of this application can improve the gravimetric energy density and cycling performance of the sodium secondary battery, where Na₃PS₃O has better effects.

It can be seen from Examples 1 and 5 to 8 that the Dᵥ50 of the sodium supplementing additive of the embodiments of this application being 2 µm to 75 µm helps to better improve the gravimetric energy density and cycling performance of the sodium secondary battery.

It can be seen from Examples 1, 9, and 10 that the Dᵥ50 of the positive electrode active material of the embodiments of this application being 4 µm to 15 µm helps to better improve the gravimetric energy density and cycling performance of the sodium secondary battery.

It can be seen from Examples 1, 11, and 12 that the mass percentage of the sodium supplementing additive of the embodiments of this application being 0.5% to 5% helps to better improve the gravimetric energy density and cycling performance of the sodium secondary battery.

It should be noted that this application is not limited to the above embodiments. The above embodiments are only examples. Within the scope of the technical solutions of this application, embodiments that have substantially the same constitution as the technical idea and exert the same effects are all included in the technical scope of this application. In addition, without departing from the gist of this application, various modifications that can be conceived by those skilled in the art applied to the embodiments, and other ways constructed by combining some constituent elements in the embodiments are also included in the scope of this application.

## Claims

1. A sodium secondary battery, wherein the sodium secondary battery comprises a sodium supplementing additive, and the sodium supplementing additive has a molecular formula of Na_{w}BₓD_{y}O_{z}, wherein B comprises at least one of P, Sb, Ge, Ti, Sn, As, or Si, D comprises at least one of S, Se, or Cl, 0<w≤15, 0<x≤5, 0<y≤15, and 0≤z≤5.

2. The sodium secondary battery according to claim 1, wherein a decomposition voltage of the sodium supplementing additive is 3.1 V to 4.0 V.

3. The sodium secondary battery according to claim 1 or 2, wherein the B comprises at least one of P, Sb, Ge, Ti, Sn, or As, the D comprises at least one of S, Se, or Cl, 0<w≤11, 0<x≤3, 0<y≤13, and 0≤z≤3.

4. The sodium secondary battery according to any one of claims 1 to 3, wherein the sodium supplementing additive comprises at least one of Na₃PS₄, Na₃PS₃O, Na₃PSO₃, Na₃PS₃Cl, Na_{2.9375}PS_{3.9375}Cl_{0.0625}, Na_{2.9}PS_{3.95}Se_{0.05}, Na₃PSe₄, Na₃SbSe₄, Na_{3.1}Ge_{0.1}P_{0.9}S₄, Na_{3.1}Ti_{0.1}P_{0.9}S₄, Na_{3.1}Sn_{0.1}P_{0.9}S₄, Na₃P_{0.62}As_{0.38}S₄, Na_{2.730}Ca_{0.135}PS₄, Na₃SbS₄, Na₁₀SnP₂S₁₂, Na₁₀GeP₂S₁₂, Na₁₁Sn₂PS₁₂, Na₁₁Sn₂PS₁₂, Na₁₁Sn₂PSe₁₂, or hydrates thereof.

5. The sodium secondary battery according to any one of claims 1 to 4, wherein the sodium supplementing additive comprises at least one of Na₃PS₄, Na₃PS₃O, Na₃PSO₃, Na₃PS₃Cl, or Na₁₁Sn₂PSe₁₂.

6. The sodium secondary battery according to any one of claims 1 to 5, wherein at least one of the following features is satisfied:
(1) a median particle size Dᵥ50 of the sodium supplementing additive is 2 µm to 75 µm;
(2) a median particle size Dᵥ50 of the positive electrode active material is 4 µm to 15 µm; or
(3) based on a total mass of the positive electrode film layer, a mass percentage of the sodium supplementing additive is 0.5% to 5%.

7. The sodium secondary battery according to any one of claims 1 to 6, wherein at least one of the following features is satisfied:
(1) a median particle size Dᵥ50 of the sodium supplementing additive is 2 µm to 50 µm;
(2) a median particle size Dᵥ50 of the positive electrode active material is 4 µm to 10 µm; or
(3) based on a total mass of the positive electrode film layer, a mass percentage of the sodium supplementing additive is 2% to 5%.

8. A positive electrode sheet, wherein the positive electrode sheet comprises a sodium supplementing additive, and the sodium supplementing additive has a molecular formula of Na_{w}BₓD_{y}O_{z}, wherein B comprises at least one of P, Sb, Ge, Ti, Sn, As, or Si, D comprises at least one of S, Se, or Cl, 0<w≤15, 0<x≤5, 0<y≤15, and 0≤z≤5.

9. A sodium supplementing additive, wherein the sodium supplementing additive has a molecular formula of Na_{w}BₓD_{y}O_{z}, wherein B comprises at least one of P, Sb, Ge, Ti, Sn, As, or Si, D comprises at least one of S, Se, or Cl, 0<w≤15, 0<x≤5, 0<y≤15, and 0≤z≤5.

10. An electric apparatus, wherein the electric apparatus comprises the sodium secondary battery according to any one of claims 1 to 7, the positive electrode sheet according to claim 8, or the sodium supplementing additive according to claim 9.
